# EUROPÄISCHE PATENTSCHRIFT

(11) **EP 2 818 389 B1**
(45) Veröffentlichungstag und Bekanntmachung des Hinweises auf die Patenterteilung: **21.03.2018**
(21) Anmeldenummer: 14173441.8
(22) Anmeldetag: 23.06.2014
(51) Int. Cl.: B62D 53/00, B62B 5/00

(54) **Portalanhänger für einen Routenzug**
Portal trailer for a trolley train
Chariot avec portique pour un train de chariots

(30) Priorität: 28.06.2013 DE 102013010830
(43) Veröffentlichungstag der Anmeldung: 31.12.2014
(73) Patentinhaber: Jungheinrich Aktiengesellschaft, 22047 Hamburg (DE)
(72) Erfinder: Badura, Klaus-Peter, 21357 Barum (DE); Kraase, Arne, 21337 Lüneburg (DE); Ziemann, Jörg, 21149 Hamburg (DE)
(74) Vertreter: Hauck Patentanwaltspartnerschaft mbB

(56) Entgegenhaltungen:
- DE-A1-102007 022 525
- DE-A1-102011 017 346
- DE-U1-202012 002 489
- US-A- 4 515 518

## Beschreibung

Die vorliegende Erfindung betrifft einen Portalanhänger für einen Routenzug.

Routenzüge, gelegentlich auch als Transportzüge bezeichnet, werden in der innerbetrieblichen Logistik eingesetzt, um Material auf vorgegebenen Routen zu transportieren. Routenzüge bestehen dabei aus einem nicht schienengeführten Schleppfahrzeug und einem oder mehreren Anhängern.

Aus DE 603 00 189 T2 ist ein Anhänger für einen Transportwagen bekannt geworden, der einen E-förmigen Rahmen zur Aufnahme eines Rollwagens besitzt. Der Anhänger besitzt zwei feststehende Räder, deren Drehachsen zusammenfallen.

Aus DE 199 58 086 A1 ist ein Transportsystem für eine staplerlose Versorgung bekannt. Hierbei wird ein C-förmiger Anhängerrahmen mit vier Rädern eingesetzt, der in seinem Inneren höhenverstellbare Lastaufnahmeeinrichtungen besitzt.

Aus EP 2 161 182 B1 ist ein Trailerzuganhänger bekannt, der einen rollengeführten Rahmen und einen im Trailerzug mitgeführten, mit Lenkrollen versehenen und auf diesen niveaugleich zu den rahmenseitigen Führungsrollen einen in den Anhänger ein- und aus diesem aus schiebbaren Innenwagen aufweist. Der Innenwagen ist im Transportzustand des Trailerzugs unter Entlastung der innenwagenseitigen Lenkrollen gewichtsübertragend am Anhängerrahmen und über diesen auf den anhängerseitigen Führungsrollen abgestützt.

Aus JP 10-291473 ist aus Fig. 10 beispielsweise ein Portalanhänger bekannt, bei dem ein vorderer und ein hinterer Anhängerabschnitt über eine portalförmige Bogenkonstruktion miteinander verbunden sind. Der Vorteil eines Portalanhängers liegt darin, dass der aufzunehmende Rollwagen von beiden Seiten in den Portalanhänger eingeschoben werden kann und somit flexibler bei der innerbetrieblichen Logistik eingesetzt werden kann.

Aus US 4,515,518 ist ein gattungsgemäßer Anhänger bekannt, der zwei Innenwagen im angehobenen Zustand transportieren kann, wobei der Anhänger in einem vorderen und hinteren Anhängerabschnitt Räder aufweist.
Der Erfindung liegt die Aufgabe zugrunde, einen Portalanhänger bereitzustellen, der mit einem möglichst einfachen Aufbau eine möglichst spurtreue Lenkung besitzt und zugleich die Möglichkeit bietet, einen Rollwagen in angehobenem Zustand zu transportieren.
Erfindungsgemäß wird die Aufgabe durch einen Portalanhänger mit den Merkmalen aus Anspruch 1 gelöst. Vorteilhafte Ausgestaltungen bilden die Gegenstände der Unteransprüche.
Der erfindungsgemäße Portalanhänger ist vorgesehen und bestimmt für einen Routenzug. Der Portalanhänger besteht aus einem vorderen, hinteren und einem mittleren Anhängerabschnitt, die entlang der Längsrichtung des Portalanhängers hintereinander angeordnet sind. Zwischen zwei benachbarten Anhängerabschnitten befindet sich jeweils ein Aufnahmebereich für einen in dem Portalanhänger mitzuführenden Rollwagen. Bei dem erfindungsgemäßen Portalanhänger sind der vordere und der mittlere Anhängerabschnitt über einen portalförmigen Bogen miteinander verbunden. Ebenso sind der mittlere und der hintere Anhängerabschnitt über einen portalförmigen Bogen miteinander verbunden. Der mittlere Anhängerabschnitt weist ein Paar von Rollen auf. Die Rollen, gelegentlich auch als Mittelachslenkung bezeichnet, erlauben es, dass der Portalanhänger spurtreu der Kurve folgt. Der Aufbau mit drei Anhängerabschnitten und zwei Portalbögen, die insgesamt einen M-förmigen Portalanhänger ergeben, ist besonders einfach und kommt aufgrund der an dem mittleren Anhängerabschnitt gelagerten Rollen ohne eine aktive Lenkung los.

Erfindungsgemäß ist der mittlere Anhängerabschnitt mit einer Hubeinrichtung ausgestattet, die es erlaubt, den mittleren Anhängerabschnitt und über die portalförmigen Bögen auch den vorderen und den hinteren Anhängerabschnitt anzuheben.

Durch das Anheben des mittleren Anhängerabschnitts wird ein in dem Aufnahmebereich zwischen zwei aneinander angrenzende Anhängerabschnitte aufgenommener Rollwagen mit angehoben, so dass dessen Räder bei einem Transport in dem Portalanhänger frei sind und keine Bodenberührung haben.

Erfindungsgemäß sind an dem vorderen und/oder hinteren Anhängerabschnitt zusätzliche Rollen vorgesehen. Bei einem Anheben des mittleren Anhängerabschnitts verlieren auch diese zusätzlichen Rollen den Bodenkontakt. Die zusätzlichen Rollen dienen dazu, den Portalanhänger im nicht angehobenen Zustand besser bewegen und verfahren zu können. Bevorzugt sind hierzu die zusätzlichen Rollen als Lenkrollen ausgebildet.

In einer bevorzugten Weiterbildung des erfindungsgemäßen Portalanhängers sind die an dem mittleren Anhängerabschnitt vorgesehenen Rollen jeweils mit einer Drehachse senkrecht zur Anhängerlängsrichtung vorgesehen. Die Rollen sind bevorzugt starr an dem mittleren Anhängerabschnitt angeordnet und besitzen miteinander fluchtende Drehachsen.

In einer zweckmäßigen Weiterbildung weist der erfindungsgemäße Portalanhänger eine Halteeinrichtung für einen Rollwagen in dem Aufnahmebereich auf. Die Halteeinrichtung besitzt eine Profilschiene, auf der der zu transportierende Rollwagen während des Transports aufliegt. Die Verwendung einer Profilschiene in dem Aufnahmebereich erlaubt es, den zu transportierenden Rollwagen von beiden Seiten in die Halteeinrichtung einzuschieben. Durch ein Anheben des Portalanhängers liegt der Rollwagen dann auf der Profilschiene auf und wird mit angehoben.

In einer bevorzugten Ausgestaltung weist jeder Anhängerabschnitt seitlich auf gegenüberliegenden Seiten eine Portalstrebe auf, die mit einer Portalstrebe eines benachbarten Anhängerabschnitts über einen Portalbogen verbunden ist. Die Anhängerabschnitte des Portalanhängers sind an ihren außenliegenden Enden durch portalförmige Bögen, bestehend aus einer Portalstrebe und einem Portalbogen, miteinander verbunden.
In einer bevorzugten Ausgestaltung ist an dem vorderen und/oder hinteren Anhängerabschnitt eine Schleppdeichsel vorgesehen. Ebenso kann an dem hinteren und/oder vorderen Anhängerabschnitt eine Anhängerkupplung vorgesehen sein.
In einer bevorzugten Weiterbildung sind an dem vorderen und/oder hinteren Anhängerabschnitt zusätzliche Rollen vorgesehen. Bei einem Anheben des mittleren Anhängerabschnitts verlieren auch diese zusätzlichen Rollen den Bodenkontakt. Die zusätzlichen Rollen dienen dazu, den Portalanhänger im nicht angehobenen Zustand besser bewegen und verfahren zu können. Bevorzugt sind hierzu die zusätzlichen Rollen als Lenkrollen ausgebildet.
Ein bevorzugtes Ausführungsbeispiel wird nachfolgend näher beschrieben. Es zeigen:
- Fig. 1: einen Routenzug mit zwei Portalanhängern, die jeweils zwei Rollwagen mitführen,
- Fig. 2a - b: das Be- und Entladen des Portalanhängers mit zwei Transportwagen,
- Fig. 3: eine Ansicht eines ersten Beispiels des Portalanhängers von der Seite und
- Fig. 4: eine Ausgestaltung des erfindungsgemäßen Portalanhängers in der Ansicht von der Seite.

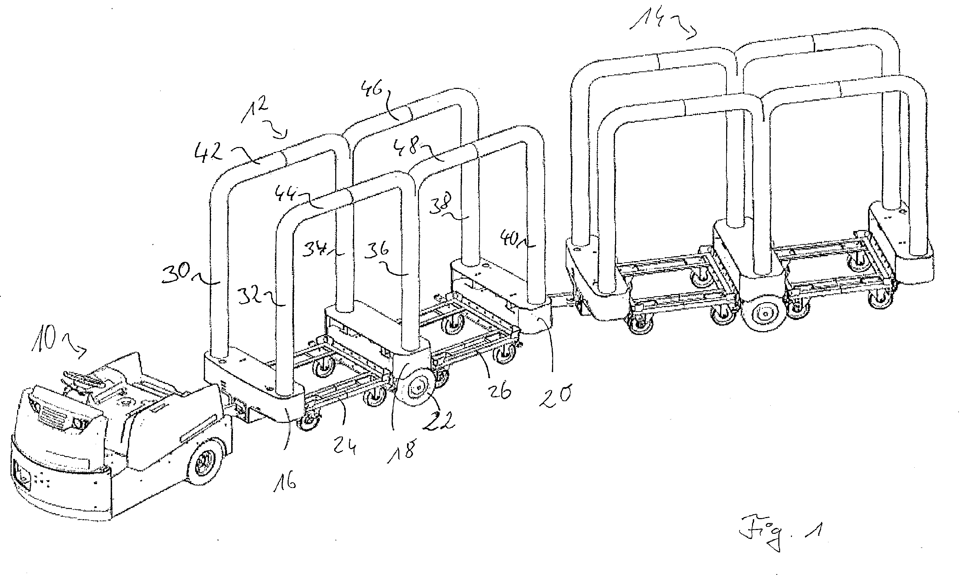

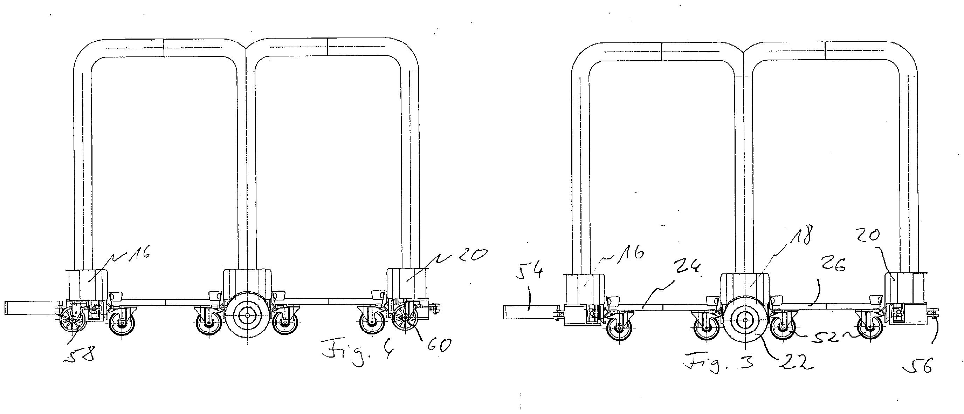

Fig. 1 bis 3 zeigen allgemein Portalanhänger, Fig. 4 zeigt ein Ausführungsbeispiel der Erfindung.

Fig. 1 zeigt einen Transport- oder Routenzug mit einem Schleppfahrzeug 10 und zwei geschleppten Anhängern 12, 14. Die dargestellten Anhänger 12 und 14 sind im Wesentlichen gleich aufgebaut. Der Portalanhänger 12 besitzt einen vorderen Anhängerabschnitt 16, einen zentralen oder mittleren Anhängerabschnitt 18 und einen hinteren Anhängerabschnitt 20. Der mittlere Anhängerabschnitt 18 ist an seinen außenliegenden Seiten mit Rollen 22 versehen. Wie in dem Ausführungsbeispiel erkennbar, sind die Rollen 22 des mittleren Anhängerabschnitts mit vergleichsweise großem Durchmesser ausgestattet, vergleichbar zu den Rädern des Schleppfahrzeugs 10, so dass der Begriff "Rollen" in dem mittleren Abschnitt auch Räder mit umfasst.

Zwischen die Anhängerabschnitte 16 und 18 ist ein Rollwagen 24 aufgenommen. Ein zweiter Rollwagen 26 ist zwischen dem mittleren Anhängerabschnitt 18 und dem hinteren Anhängerabschnitt 20 vorgesehen. Grundsätzlich können die Portalanhänger in beide Richtungen verwendet werden, so dass vorderer und hinterer Anhängerabschnitt lediglich zur besseren Orientierung dienen und nicht die Fahrtrichtung des Anhängers festlegen. Auf dem vorderen Anhängerabschnitt 16 ist an dem außenliegenden Seiten jeweils eine Portalstrebe 30, 32 vorgesehen. Der mittlere Anhängerabschnitt 18 besitzt die Portalstreben 34 und 36, während auf dem hinteren Anhängerabschnitt 20 die Portalstreben 38 und 40 vorgesehen sind. Die Portalstreben 30 und 34 ebenso wie die Streben 32 und 36 sind über jeweils einen Portalbogen 42, 44 miteinander verbunden. Ebenso sind die Portalstreben 34 und 38 sowie 36 und 40 über die Bögen 46 und 48 miteinander verbunden.

Wie in den Figuren zu erkennen, kann beispielsweise die Portalstrebe 30 mit einer ersten Hälfte des Portalbogens 40 einstückig ausgebildet sein und die Portalstrebe 34 mit einem zweiten, sich in Richtung des vorderen Anhängerabschnitts erstreckenden Teil des Portalbogens mittig verbunden sein. Die Unterscheidung zwischen Portalstrebe und Portalbogen bezieht sich lediglich auf die Geometrie und die räumliche Position und nicht auf die den portalförmigen Bogen bildenden Bauteile. Insgesamt bilden die portalförmigen Bögen eine M-förmige Struktur für den Portalanhänger.

Die zwischen den Anhängerabschnitten aufgenommenen Rollwagen 24 und 26 sind in der dargestellten Abbildung lediglich schematisch als Rollplattform dargestellt. Selbstverständlich können auch höhere und geschlossene Rollwagen mit dem Portalanhänger transportiert werden. Bei geschlossenen Rollwagen wird deren Höhe allerdings durch die Höhe der Portalbögen 42, 44, 46, 48 begrenzt.

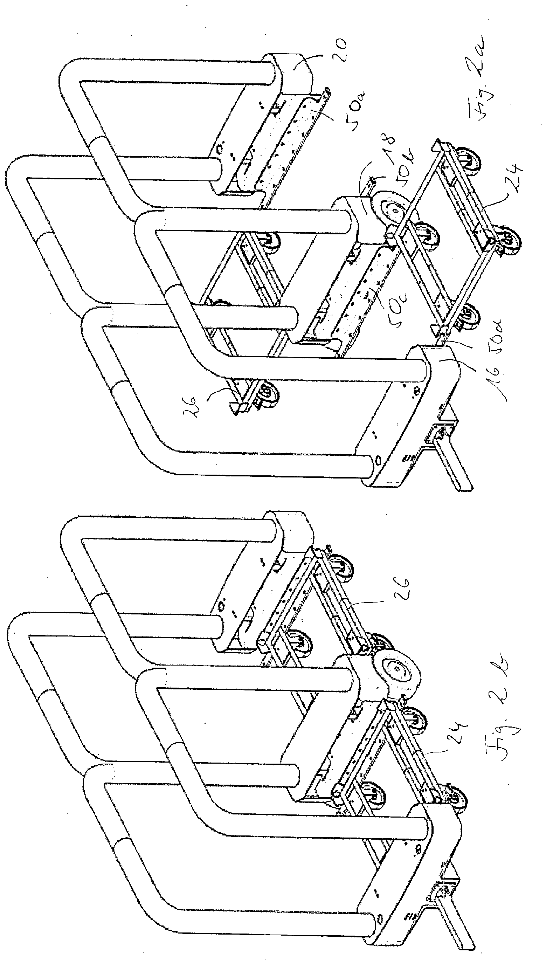

Fig. 2a zeigt einen weiteren Portalanhänger, bei dem die Rollwagen 24 und 26 in unterschiedlicher Richtung seitlich aus dem Portalanhänger herausgeschoben wurden.

Wie in Fig. 2a zu erkennen, ist zwischen den einander zugewandten Seiten der Anhängerabschnitte jeweils eine Profilleiste 50a bis d vorgesehen. Die Profilleisten besitzen ein L-förmiges Profil, auf das die Rollwagen 24, 26 aufgeschoben werden.

Der mittlere Anhängerabschnitt 18 kann durch eine Hubeinrichtung (nicht dargestellt) angehoben werden. Durch das Anheben erhöht sich der Abstand der Profilleisten 50b, 50c gegenüber dem Untergrund, so dass ein eingeschobener Rollwagen 24, 26 mit angehoben wird. Gleichzeitig werden die portalförmigen Bögen und auch der hintere und der vordere Anhängerabschnitt mitangehoben, so dass auch die Profilleisten 50a und 50d als Halteeinrichtungen für die Rollwagen mitangehoben werden.

Fig. 2b zeigt die zwischen die Anhängerabschnitte eingeschobenen Rollwagen, die auf den Profilschienen als Hubeinrichtungen aufliegen.

Fig. 3 zeigt den Portalanhänger in seiner angehobenen Position, wobei die Räder 22 des Portalanhängers auf dem Boden stehen und die Rollwagen 24, 26 und ihre Räder 52 vom Boden freikommen sind. Die beiden Räder 22 in dem mittleren Anhängerabschnitt 18 besitzen miteinander fluchtende Drehachsen. Auch kann eine Starrachse zwischen den Rädern 22 vorgesehen sein. Für die Lenkung müssen die Räder 22 allerdings unabhängig auf dieser Starrachse drehen können, damit bei einer Kurvenfahrt keine Querbewegung auftritt.

Fig. 3 zeigt zusätzlich eine Schleppdeichsel 54, die schwenkbar an dem vorderen Anhängerabschnitt 16 gelagert ist. Hinzu kommt eine Anhängerkupplung 56, die eine entsprechend ausgebildete Deichsel aufnehmen kann.

Fig. 4 zeigt eine Ausgestaltung des erfindungsgemäßen Portalanhängers, bei der der vordere und hintere Abschnitt 16', 20' zusätzlich mit Lenkrollen 58, 60 versehen sind. Die Lenkrollen 58, 60 erlauben es, bei abgesenktem Portalanhänger ein Aufsetzen des hinteren bzw. vorderen Anhängerabschnitts auf dem Boden zu verhindern. So kann auch der nicht beladene Portalanhänger gut bewegt und für weitere Arbeit positioniert werden.

### Bezugszeichenliste

- 10: Schleppfahrzeug
- 12: Anhänger
- 14: Anhänger
- 16: vorderer Anhängerabschnitt
- 16': vorderer Anhängerabschnitt
- 18: mittlerer Anhängerabschnitt
- 20: hinterer Anhängerabschnitt
- 20': hinterer Anhängerabschnitt
- 22: Rollen
- 24: Rollwagen
- 26: Rollwagen
- 30: Portalstrebe
- 32: Portalstrebe
- 34: Portalstrebe
- 36: Portalstrebe
- 38: Portalstrebe
- 40: Portalstrebe
- 42: Portalbogen
- 44: Portalbogen
- 46: Portalbogen
- 48: Portalbogen
- 50a: Profilleiste
- 50b: Profilleiste
- 50c: Profilleiste
- 50c: Profilleiste
- 50d: Profilleiste
- 52: Rad an Rollwagen
- 54: Schwenkdeichsel
- 56: Anhängerkupplung
- 58: Lenkrollen
- 60: Lenkrollen

## Patentansprüche

1. Portalanhänger für eine Routenzug, bestehend aus einem vorderen, hinteren und mittleren Anhängerabschnitt, zwischen denen jeweils ein Aufnahmebereich für einen mitzuführenden Rollwagen vorgesehen ist, wobei der vordere mit dem mittleren und der mittlere mit dem hinteren Anhängerabschnitt über je einen portalförmigen Bogen miteinander verbunden sind, und wobei der vordere und/ oder hintere Anhängerabschnitt zusätzliche Rollen aufweist, **dadurch gekennzeichnet, dass** der mittlere Anhängerabschnitt ein Paar von Rollen oder Rädern und eine Hubeinrichtung aufweist, mit der der mittlere Anhängerabschnitt und über die Bögen auch der vordere und der hintere Anhängerabschnitt angehoben werden, wobei die zusätzlichen Rollen bei einem Anheben des mittleren Anhängerabschnitts ihren Bodenkontakt verlieren.

2. Portalanhänger nach Anspruch 1, **dadurch gekennzeichnet, dass** die Rollen oder Räder an dem mittleren Anhängerabschnitt mit ihrer Drehachse senkrecht zur Anhängerlängsrichtung starr angeordnet sind.

3. Portalanhänger nach Anspruch 1 oder 2, **dadurch gekennzeichnet, dass** eine Halteeinrichtung für einen Rollwagen in dem Aufnahmebereich vorgesehen ist, die eine Profilschiene aufweist, auf der ein zu transportierender Rollwagen während des Transports aufliegt.

4. Portalanhänger nach einem der Ansprüche 1 bis 3, **dadurch gekennzeichnet, dass** jeder Anhängerabschnitt auf einander gegenüberliegenden Seiten, bezogen auf die Fahrzeuglängsrichtung, jeweils eine Portalstrebe aufweist, die mit einer Portalstrebe eines benachbarten Anhängerabschnitts über einen Portalbogen verbunden ist.

5. Portalanhänger nach einem der Ansprüche 1 bis 4, **dadurch gekennzeichnet, dass** der vordere oder hintere Anhängerabschnitt eine Schleppdeichsel aufweist.

6. Portalanhänger nach einem der Ansprüche 1 bis 5, **dadurch gekennzeichnet, dass** der hintere oder vordere Anhängerabschnitt eine Anhängerkupplung aufweist.

7. Portalanhänger nach Anspruch 6, **dadurch gekennzeichnet, dass** die zusätzlichen Rollen als Lenkrollen ausgebildet sind.

## Claims

1. A portal trailer for a tugger train consisting of a front, rear and middle trailer section between which there is a receiving area for a dolly to be entrained, wherein the front trailer section is connected to the middle trailer section, and the middle trailer section to the rear trailer section, by a portal-like arch, and wherein the front and/or rear trailer section has additional rollers, **characterized in that** the middle trailer section has a pair of rollers or wheels and a lifting apparatus by means of which the middle trailer section and, via the arches, the front and rear trailer section can be lifted, wherein the additional rollers lose contact with the ground when the middle trailer section is lifted.

2. The portal trailer according to claim 1, **characterized in that** the rollers or wheels are rigidly arranged on the middle trailer section with their rotational axis perpendicular to the trailer longitudinal direction.

3. The portal trailer according to claim 1 or 2, **characterized in that** a holding apparatus for a dolly is provided in the receiving area, which has a profile rail, on which a dolly to be transported rests during transport.

4. The portal trailer according to one of claims 1 to 3, **characterized in that** each trailer section has one portal brace each on opposite-lying sides with respect to the vehicle longitudinal direction, which is connected with a portal brace of a neighboring trailer section via a portal arch.

5. The portal trailer according to one of claims 1 to 4, **characterized in that** the front or rear trailer section has a towing drawbar.

6. The portal trailer according to one of claims 1 to 5, **characterized in that** the rear or front trailer section has a trailer coupling.

7. The portal trailer according to claim 6, **characterized in that** the additional rollers are designed as steering rollers.

## Revendications

1. Remorque avec portique pour un train de rouleurs, comprenant des sections de remorque avant, arrière et centrale, entre lesquelles il est respectivement prévu une région de réception pour un chariot embarqué, dans laquelle la section de remorque avant étant reliée à la section de remorque centrale et la section de remorque centrale étant reliée à la section de remorque arrière respectivement par un arc en forme de portique, et dans laquelle la section de remorque avant et/ou la section de remorque arrière présentent des roulettes supplémentaires, **caractérisée en ce que** la section de remorque centrale présente une paire de roulettes ou de roues et un dispositif de levage permettant de relever la section de remorque centrale tout comme les sections de remorque avant et arrière par le biais des arcs, dans laquelle les roulettes supplémentaires perdent le contact avec le sol lors d'un levage de la section de remorque centrale.

2. Remorque avec portique selon la revendication 1, **caractérisée en ce que** les roulettes ou les roues sont disposées fixement sur la section de remorque centrale avec leur axe de rotation perpendiculairement à la direction longitudinale de la remorque.

3. Remorque avec portique selon la revendication 1 ou 2, **caractérisée en ce qu'**il est prévu un dispositif de maintien pour un chariot dans la région de réception, lequel présente un rail profilé sur lequel repose un chariot à transporter pendant le transport.

4. Remorque avec portique selon l'une des revendications 1 à 3, **caractérisée en ce que** chaque section de remorque présente respectivement une entretoise de portique sur des côtés opposés par rapport à la direction longitudinale du véhicule, laquelle est reliée à une entretoise de portique d'une section de remorque voisine par le biais d'un arc de portique.

5. Remorque avec portique selon l'une des revendications 1 à 4, **caractérisée en ce que** la section de remorque avant ou arrière présente un timon de remorquage.

6. Remorque avec portique selon l'une des revendications 1 à 5, **caractérisée en ce que** la section de remorque arrière ou avant présente un attelage de remorque.

7. Remorque avec portique selon la revendication 6, **caractérisée en ce que** les roulettes supplémentaires sont conçues comme des roulettes directrices.
